Europäisches Patentamt

European Patent Office

Office européen des brevets

(11) Veröffentlichungsnummer: **0 009 508**
A1

(12) **EUROPÄISCHE PATENTANMELDUNG**

(21) Anmeldenummer: **78100987.3**

(22) Anmeldetag: **25.09.78**

(51) Int. Cl.³: **B 65 G 13/07**
**B 65 G 39/02**

(43) Veröffentlichungstag der Anmeldung:
**16.04.80 Patentblatt 80/8**

(84) Benannte Vertragsstaaten:
**BE CH DE FR GB LU NL SE**

(71) Anmelder: **CARL SCHENCK AG**
**Landwehrstrasse 55 Postfach 40 18**
**D-6100 Darmstadt(DE)**

(72) Erfinder: **Zschau, Siegfried**
**Am Bangert 4**
**D-6101 Modautal 2(DE)**

(72) Erfinder: **Stösser, Hartmut**
**Hähnleiner Strasse 2**
**D-6144 Zwingenberg(DE)**

(74) Vertreter: **Dallhammer, Herbert, Dipl.-Ing.**
**Carl Schenck AG Patentabteilung Postfach 4018**
**D-6100 Darmstadt(DE)**

(54) Förderrolle.

(57) Eine Förderrolle (1) mit Führungsbund (2) ist vorgesehen in Verbindung mit weiteren derartigen Förderrollen eine Förderbahn zu bilden, auf der zu transportierende Gegenstände, welche eine glatte Bodenfläche oder Tragschienen besitzen, bewegt werden können.

Die Förderrolle (1) ist zugleich als Antriebsrolle ausgebildet, wobei sie das endlose Antriebsmittel (6) zwischen dem Führungsbund (2) und einem weiteren Bund (10) führt.

EP 0 009 508 A1

- 1 -

Förderrolle

Die Erfindung betrifft eine Förderrolle mit einer, das Fördergut tragenden Rolle und einem Führungsbund.

Bisherige Förderrollen, bei denen das Fördergut von einer Rolle getragen wird, und welche einen Führungsbund besitzen, so genannte Bundrollen, benötigen für ihren Antrieb eine zusätzliche Antriebsvorrichtung, welche beispielsweise als Zahnrad auf derselben Welle aufgekeilt ist, wie die Bundrolle.

Wird anstelle eines Zahnrades als das das Antriebsmoment übertragende Element ein Riemenantrieb gewählt, so ist es erforderlich, wenn derartige Bundrollen zu einer Bundrollenbahn zusammengefasst werden, nicht nur die Bundrollen auszurichten, sondern auch gleichzeitig die getrennt auf der Welle aufgekeilten Umlenkrollen fluchtend auszurichten, um einen erhöhten Verschleiß des Antriebsbandes zu vermeiden und auch um ein Ablaufen des Bandes von der Antriebsrolle zu vermeiden.

Ausgehend von diesem Stand der Technik hat sich die vorliegende Erfindung die Aufgabe gestellt, einen direkten Antrieb für Förderrollen in Vorschlag zu bringen. Diese Aufgabe wird erfindungsgemäß dadurch gelöst, daß die Förderrolle gleichzeitig als Antriebsrolle ausgebildet ist,

0009508

und daß das, das Antriebsmoment übertragende Element
zwischen der Förderrolle und einem weiteren Bund geführt
wird. Hierdurch wird der Nachteil beseitigt, daß zusätzlich die Umlenkrolle für den Antrieb auf die Welle
aufgekeilt werden muß; es wird weiter vermieden, daß ein
ungleichförmiger Verschleiß zwischen Antriebsrolle und
Förderrolle auftritt, was insbesondere beim rauhen Betrieb auf Förderstraßen und beim Stapeln auftritt und
was dazu führt, daß beim Antrieb der einzelnen Förderrolle eine weitere Stoßbelastung zufolge des vorhandenen
Spiels zwischen Umlenkrolle und Welle, auf die Förderrolle einwirkt. Weiterhin wird durch Verwenden der Förderrolle als dem einen Anlaufbund bei einem Band- oder
Zahnriemenantrieb es nur noch erforderlich, einen weiteren Bund vorzusehen, der bereits bei der Herstellung der
erfindungsgemäßen Förderrolle ohne zusätzlichen Aufwand
mit hergestellt werden kann.

Eine erfindungsgemäße Ausgestaltung besteht darin, daß
der Führungsbund der Förderrolle und ein weiterer Bund
das das Antriebsmoment übertragende Element führen. Durch
Verwenden des Führungsbundes der Antriebsrolle als Führungselement, läßt sich mit einfachen Mitteln eine Übersetzung bewerkstelligen, ohne zusätzliche Übersetzungsräder in den Bandantrieb einbauen zu müssen.

Eine andere Ausgestaltung des Erfindungsgegenstandes
besteht darin, daß die Stirnfläche der Förderrolle und
ein weiterer Bund das das Antriebsmoment übertragende
Element führen. Hierdurch wird es möglich, eine große
Bandbreite von Übersetzungsmöglichkeiten bereits bei der
Herstellung von erfindungsgemäßen Förderrollen zu erreichen, was insbesondere in der Verwendung bei der Fördertechnik zu einer beachtlichen Einsparung im Hinblick
auf Lagerhaltung der gesamten Förderanlage führt.

Anhand einer Figur wird der Erfindungsgegenstand näher
erläutert.

Eine Förderrolle 1 besteht aus einem Führungsbund 2 und einer eine Last 3 tragenden Rolle 4, welche einstückig mit dem Führungsbund 2 hergestellt ist. Gleichzeitig einstückig mit der Förderrolle 1 wird eine Antriebsrolle 5 bzw. 5' hergestellt, die zur Aufnahme eines, das Antriebsmoment übertragenden Zahnriemens 6 bzw. 6' dient.

Diese einstückige Einheit wird nunmehr mit einer Welle 7 drehfest verbunden, wobei die Welle 7 in einem schematisch dargestellten Lager 8 gelagert ist.

Wird die Welle 7 verlängert und trägt an ihrem anderen Ende eine gleichartige, erfindungsgemäße Förderrolle 1, die in einem nicht dargestellten Lager ebenfalls gelagert ist, so stellt diese Einrichtung ein Bauelement einer Bundrollenbahn dar, auf der die Last 3 transportiert werden kann, und wobei sich die Bundrollenbahn selbst auf Stützsockeln 9 über die Lager 8 abstützt.

Um zu verhindern, daß der Zahnriemen 6 bzw. 6' von der Antriebsrolle 5 bzw. 5' abläuft, ist ein Bund 10 bzw. 10' vorgesehen, der entweder bei der Herstellung einstückig mit der Förderrolle 1 hergestellt wird oder der als einfache Blechscheibe anschließend angeschraubt oder als Innenspannring in eine Nut in der Antriebsrolle 5 bzw. 5' eingebracht werden kann.

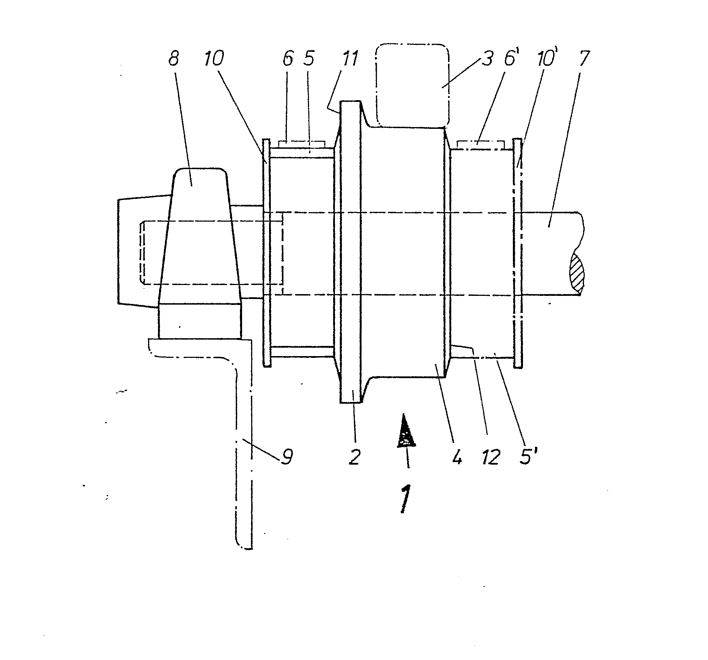

Wie aus der Zeichnung ersichtlich, kann zufolge der Schulter 11 des Führungsbundes 2 bereits bei der Herstellung der Durchmesser der Rolle 5 in weiten Grenzen variiert werden, was zu einer variablen Übersetzungsmöglichkeit führt, ebenso gestattet die Stirnfläche 12 der Rolle 4 ein weiteres Variieren der Antriebsübersetzungen.

Derartige Förderrollen 1 lassen sich, wie bereits oben ausgeführt, zu Bundrollenbahnen zusammenstellen, die als Förderstraße für Stückgut oder Paletten eingesetzt werden; genauso kann eine Mehrzahl derartiger Förderrollen in Hochregal-Lagern als rollbare Lagerebene verwendet werden. In derselben Weise können insbesondere Schwerlastrollenbahnen in Gießereien mit derartigen Förderrollen ausgestattet sein.

Patentansprüche:

1. Förderrolle mit einer das Fördergut tragenden Rolle und einem Führungsbund, dadurch gekennzeichnet, daß die Förderrolle (1) gleichzeitig als Antriebsrolle (5 bzw. 5') ausgebildet ist, und daß das, das Antriebsmoment übertragende Element (6) zwischen der Förderrolle (1) und einem weiteren Bund (10 bzw. 10') geführt wird.

2. Förderrolle nach Anspruch 1, dadurch gekennzeichnet, daß der Führungsbund (2) der Förderrolle (1) und ein weiterer Bund (10 bzw. 10') das das Antriebselement übertragende Element (6) führen.

3. Förderrolle nach Anspruch 1, dadurch gekennzeichnet, daß die Stirnfläche (12) der Förderrolle (1) und ein weiterer Bund (10 bzw. 10')/das das Antriebsmoment übertragende Element (6) führen.

0009508

**Europäisches Patentamt**

# EUROPÄISCHER RECHERCHENBERICHT

EP 78 100 987.3

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | GB - A - 1 032 087 (KORNYLAK CORPORATION) *Anspruch 2; Fig. 13 * | 1 | B 65 G 13/07 B 65 G 39/02 |
| | -- | | |
| | GB - A - 1 149 315 (LAMSON ENGINEE- RING) *Seite 1, Zeilen 65 bis 71; Fig. 3 * | 1 | |
| | -- | | |
| | DE - A - 2 245 581 (PRECISMECA) *Seite 2, Zeilen 19 bis 24* | 1 | RECHERCHIERTE SACHGEBIETE (Int. Cl.²) |
| | -- | | |
| | DE - A - 2 519 375 (INTERROLL FÖRDERTECHNIK) *Seite 2, Zeilen 14 bis 30* | 1 | B 65 G 13/00 B 65 G 39/00 |
| | -- | | |
| A | DE - U - 1 775 982 (SCHLOEMANN) * Fig. 2 * | | |
| | -- | | |
| A | DE - U - 7 411 241 (STUMPF) *Seite 1* | | KATEGORIE DER GENANNTEN DOKUMENTE |
| | -- | | X: von besonderer Bedeutung |
| A | DE - B - 1 756 916 (FROMME FÖRDERANLAGEN) * Fig. 3 * | | A: technologischer Hintergrund O: nichtschriftliche Offenbarung P: Zwischenliteratur T: der Erfindung zugrunde liegende Theorien oder Grundsätze |
| | -- | | E: kollidierende Anmeldung |
| A | US - A - 2 697 509 (W.W. CUSHMAN) *Spalte 2, Zeilen 34 bis 45* | | D: in der Anmeldung angeführtes Dokument L: aus andern Gründen angeführtes Dokument |
| | ---- | | &: Mitglied der gleichen Patent- familie, übereinstimmendes Dokument |

| X | Der vorliegende Recherchenbericht wurde für alle Patentansprüche erstellt. | | |
|---|---|---|---|
| Recherchenort | Abschlußdatum der Recherche | Prüfer | |
| Berlin | 26.04.1979 | SIMON | |

EPA form 1503.1 06.78